# EUROPÄISCHE PATENTSCHRIFT

(11) **EP 3 130 801 B1**
(45) Veröffentlichungstag und Bekanntmachung des Hinweises auf die Patenterteilung: **06.02.2019**
(21) Anmeldenummer: 15180404.4
(22) Anmeldetag: 10.08.2015
(51) Int. Cl.: F03D 80/30

(54) **WINDENERGIEANLAGENROTORBLATT MIT EINER FUNKENSTRECKE**
WIND TURBINE ROTOR BLADE WITH A SPARK GAP
PALE DE ROTOR D'ÉOLIENNE DOTÉE D'UN ÉCLATEUR À ÉTINCELLE

(43) Veröffentlichungstag der Anmeldung: 15.02.2017
(73) Patentinhaber: Nordex Energy GmbH, 22419 Hamburg (DE)
(72) Erfinder: Ohlerich, Nick, 18055 Rostock (DE)
(74) Vertreter: Hauck Patentanwaltspartnerschaft mbB

(56) Entgegenhaltungen:
- WO-A1-00/79128
- WO-A1-2012/055418
- DE-A1-102005 045 579

## Beschreibung

Die Erfindung betrifft ein Windenergieanlagenrotorblatt mit einem Blitzschutzrezeptor, einer ersten elektrischen Leitung und einer Potentialausgleichseinrichtung, die eine erste Elektrode, die mit dem Blitzschutzrezeptor verbunden ist, und eine zweite Elektrode, die mit der ersten elektrischen Leitung verbunden ist, aufweist, wobei zwischen den beiden Elektroden eine Funkenstrecke ausgebildet ist.

Es ist bekannt, Windenergieanlagenrotorblätter mit einer Blitzschutzeinrichtung vor Schäden durch Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Sind in dem Windenergieanlagenrotorblatt mehrere elektrisch leitfähige Elemente mehr oder weniger parallel angeordnet, kommt es durch elektromagnetische Induktion bei einem Blitzschlag zu großen Potentialdifferenzen zwischen den elektrisch leitfähigen Elementen, die zu Überschlägen oder gar zur Zerstörung des Windenergieanlagenrotorblatts führen können. Es ist bekannt, derartigen Überschlägen durch Potentialausgleichselemente entgegenzuwirken.

Ein solcher Potentialausgleich ist insbesondere erforderlich, wenn eines der elektrisch leitfähigen Elemente eine elektrische Heizeinrichtung zum Enteisen der Oberfläche des Windenergieanlagenrotorblattes ist. Diese Heizeinrichtungen sind mit einer Stromversorgung versehen und müssen im Betrieb elektrisch vom Blitzschutzsystem getrennt sein. Hierzu können im Inneren des Rotorblatts Funkenstrecken zwischen der Heizeinrichtung und der Blitzschutzeinrichtung vorgesehen sein, wie in der Druckschrift WO 00/79128 A1 gezeigt. Diese Funkenstrecken werden im Fall eines Blitzschlages überbrückt und stellen einen Potentialausgleich zwischen der Heizeinrichtung und der Blitzschutzeinrichtung her.

Die Druckschrift WO 2014/023734 A1 zeigt ein Windenergieanlagenrotorblatt mit einer elektrischen Heizeinrichtung und einem Blitzschutzleiter. Die Heizeinrichtung und der Blitzschutzleiter sind über die Länge des Rotorblatts an mehreren Stellen über Funkenstrecken miteinander verbunden. Die Funkenstrecken sind im Inneren des Rotorblatts in Kombination mit den Blitzschutzrezeptoren angeordnet.

Um die Betriebssicherheit der Blitzschutzeinrichtung zu gewährleisten, muss die Funktionsfähigkeit der Funkenstrecken regelmäßig überprüft werden. Insbesondere im Blattspitzenbereich angeordnete Funkenstrecken sind dabei nur sehr schwer zugänglich.

Aus der Druckschrift WO 2012/055418 A1 ist ein Windenergieanlagenrotorblatt mit den Merkmalen des Oberbegriffs des Anspruchs 1 bekannt geworden. Bei dem bekannten Windenergieanlagenrotorblatt bildet ein metallischer Wirbelerzeugerstreifen einen zusätzlichen Blitzrezeptor, dessen elektrische Verbindung zu einem Blitzschutzleiter außenliegende Funkenstrecken aufweist.

Davon ausgehend ist es Aufgabe der Erfindung, ein Windenergieanlagenrotorblatt mit einer Potentialausgleichseinrichtung zur Verfügung zu stellen, das einfacher in einem betriebssicheren Zustand gehalten werden kann.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat einen Blitzschutzrezeptor, eine erste elektrische Leitung und eine Potentialausgleichseinrichtung, die eine erste Elektrode, die mit dem Blitzschutzrezeptor verbunden ist, und eine zweite Elektrode, die mit der ersten elektrischen Leitung verbunden ist, aufweist, wobei zwischen den beiden Elektroden eine Funkenstrecke ausgebildet ist und die beiden Elektroden an einer Außenseite des Windenergieanlagenrotorblatts angeordnet und der umgebenden Luftströmung ausgesetzt sind.

Der Blitzschutzrezeptor kann insbesondere an oder nahe einer Blattspitze des Windenergieanlagenrotorblatts angeordnet sein, aber auch in einem größeren Abstand davon, auch in Kombination mit einem oder mehreren weiteren Blitzschutzrezeptoren. Er besteht in der Regel aus Metall, beispielsweise aus Kupfer oder Aluminium, und bietet eine an der Außenseite des Windenergieanlagenrotorblatts freiliegende Fläche, in die ein Blitz einschlagen kann.

Die erste elektrische Leitung kann ein Blitzschutzleiter sein oder eine sonstige elektrische Leitung, beispielsweise eine Versorgungsleitung, mit der einem in oder an dem Windenergieanlagenrotorblatt angeordneten, elektrischen Verbraucher elektrische Energie zugeführt werden kann, oder eine Signalleitung, über die elektrische Signale beispielsweise von einem in oder an dem Windenergieanlagenrotorblatt angeordneten Sensor übertragen werden können. Die erste elektrische Leitung kann so dimensioniert sein, dass sie im Falle eines Blitzschlags, bei dem es zu einem Potentialausgleich über die Funkenstrecke kommt, einen Blitzstrom ganz oder teilweise tragen kann, insbesondere bis zu einer Blattwurzel. In diesem Sinne kann es sich bei der ersten elektrischen Leitung um einen Blitzschutzleiter handeln, auch wenn die erste elektrische Leitung im normalen Betrieb des Windenergieanlagenrotorblatts eine andere Funktion erfüllt. Die erste elektrische Leitung ist von dem Blitzschutzrezeptor galvanisch getrennt. Erst im Falle eines Blitzschlags kommt es zu einem Potentialausgleich über die Funkenstrecke.

Bei der Verbindung der ersten Elektrode mit dem Blitzschutzrezeptor und/oder bei der Verbindung der zweiten Elektrode mit der ersten elektrischen Leitung kann es sich um eine mittelbare oder unmittelbare Verbindung handeln. Beispielsweise kann diese Verbindung einen starren elektrischen Leiter, ein mehr oder weniger flexibles Kabel und/oder eine Schraubverbindung enthalten.

Die beiden Elektroden sind bevorzugt massive Metallteile, insbesondere bestehend aus Kupfer. Die beiden Elektroden sind in einem Abstand voneinander angeordnet, der so bemessen ist, dass es bei den bei einem Blitzschlag auftretenden, hohen Potentialdifferenzen zu einem Überschlag kommt, wobei der Abstand gleichzeitig eine ausreichende elektrische Isolation für die im normalen Betrieb des Windenergieanlagenrotorblatts auftretenden Potentialdifferenzen gewährleistet. Typischerweise kann der Abstand zwischen den beiden Elektroden in der Größenordnung von etwa einem oder mehreren Zentimetern liegen.

Bei der Erfindung sind die beiden Elektroden an einer Außenseite des Windenergieanlagenrotorblatts angeordnet und der umgebenden Luftströmung ausgesetzt. Ein wichtiger Vorteil dieser außen liegenden Anordnung der Elektroden ist, dass sie für Wartungs- und Reparaturarbeiten ohne weiteres von außen zugänglich sind. Darüber hinaus kann die Luftströmung insbesondere den Freiraum zwischen den beiden Elektroden erfassen und einer Anlagerung von Feuchtigkeit oder Partikeln entgegenwirken.

Bei der Erfindung weist das Windenergieanlagenrotorblatt eine Stromschiene auf, die einen Strompfad von einer Druckseite des Windenergieanlagenrotorblatts zu einer Saugseite des Windenergieanlagenrotorblatts bildet, in den die beiden Elektroden integriert sind und der von der Funkenstrecke unterbrochen ist. Stromschienen als Potentialausgleichselemente sind bekannt. Sie zeichnen sich durch eine robuste Ausführung und hohe Stromtragfähigkeit aus. Soll die Stromschiene einen Potentialausgleich zwischen auf unterschiedlichen Seiten des Windenergieanlagenrotorblatts (Druckseite/Saugseite) angeordneten Leitern herstellen, kann die Stromschiene insbesondere auf der Außenseite des Windenergieanlagenrotorblatts angeordnet sein. Dies ermöglicht eine Montage der Stromschiene nach weitgehender Fertigstellung des Rotorblatts, insbesondere nach dem Zusammenfügen zweier Halbschalen, in die die beiden über die Stromschiene miteinander zu verbindenden Leiter integriert sein können. Bei der Erfindung wird die Funkenstrecke in die Stromschiene integriert, was eine besonders kompakte Anordnung ermöglicht.

In einer Ausgestaltung ist die Stromschiene im Wesentlichen in Strömungsrichtung einer das Windenergieanlagenrotorblatt im Betrieb umströmenden Luftströmung angeordnet. Dies ist aerodynamisch vorteilhaft.

In einer Ausgestaltung ist die Stromschiene um eine Profilendkante des Windenergieanlagenrotorblatts herumgeführt. Dadurch können unerwünschte Wechselwirkungen zwischen der Stromschiene und einer im Wesentlichen im Bereich der Profilnasenkante angeordneten, elektrischen Heizeinrichtung vermieden werden.

In einer Ausgestaltung weist die Stromschiene einen ersten Abschnitt mit einem ersten Ende, das die erste Elektrode bildet, und mit einem zweiten Ende, das mit dem Blitzschutzrezeptor verbunden ist, und einen zweiten Abschnitt mit einem ersten Ende, das die zweite Elektrode bildet, und mit einem zweiten Ende, das mit der ersten elektrischen Leitung verbunden ist, auf. Zwischen den beiden Elektroden ist die Funkenstrecke angeordnet. Die beiden zweiten Enden können unmittelbar bis an die Leiter, zwischen denen die Stromschiene einen Potentialausgleich ermöglichen soll, herangeführt und mit diesem verbunden sein, oder sie können in einem Abstand davon enden und mittelbar, beispielsweise über Kabel, mit diesen verbunden sein.
In einer Ausgestaltung weist der erste Abschnitt oder der zweite Abschnitt ein Langloch auf, mit dessen Hilfe er an dem Windenergieanlagenrotorblatt befestigt ist und das eine Einstellung des Abstands zwischen den beiden Elektroden ermöglicht. Auf diese Weise kann die Länge der Funkenstrecke gezielt eingestellt werden. Die elektrische Verbindung des ersten bzw. des zweiten Abschnitts an dessen zweitem Ende kann insbesondere mit Hilfe eines Gewindebolzens hergestellt werden, der in das Langloch eingesetzt ist, sodass das Langloch gleichzeitig eine einfache Befestigung an dem Windenergieanlagenrotorblatt und eine zuverlässige elektrische Verbindung ermöglicht.

In einer Ausgestaltung ist der erste Abschnitt oder der zweite Abschnitt um die Profilendkante des Windenergieanlagenrotorblatts herumgeführt. Auf diese Weise ermöglicht die Stromschiene den Potentialausgleich zwischen Druck- und Saugseite.

In einer Ausgestaltung läuft das erste Ende des ersten Abschnitts in Richtung zu dem ersten Ende des zweiten Abschnitts spitz zu und/oder umgekehrt. Mit "und/oder umgekehrt" ist gemeint, dass alternativ oder zusätzlich das erste Ende des zweiten Abschnitts in Richtung zu dem ersten Ende des ersten Abschnitts hin spitz zulaufen kann. Damit, dass das betreffende Ende spitz zuläuft, ist gemeint, dass sich insbesondere seine Breite in der genannten Richtung verjüngt, wobei die Spitze mehr oder weniger stark abgerundet sein kann. Eine solche Geometrie einer oder beider Elektroden führt zur Ausbildung der Funkenstrecke in einem klar definierten Bereich.

In einer Ausgestaltung ist ein Oberflächenbereich an der Außenseite des Windenergieanlagenrotorblatts, in dem die beiden Elektroden angeordnet sind, mit einer hitzebeständigen Beschichtung versehen. Die Beschichtung dient beim Zünden der Funkenstrecke als Schutzschicht für das Material der Rotorblattschale (zum Beispiel ein Glasfaserlaminat) und kann beispielsweise aus Keramik oder Teflon bestehen.

In einer Ausgestaltung weist das Windenergieanlagenrotorblatt eine elektrische Heizeinrichtung auf und die erste elektrische Leitung ist eine Versorgungsleitung, über die die elektrische Heizeinrichtung mit einem Heizstrom versorgt werden kann. In diesem Fall ermöglicht die galvanische Trennung zwischen der ersten elektrischen Leitung und dem Blitzschutzrezeptor, der in der Regel über einen Blitzschutzleiter geerdet ist, eine zuverlässige Bestromung der Heizeinrichtung. Gleichzeitig werden Beschädigungen an der Versorgungsleitung oder an der elektrischen Heizeinrichtung durch den im Falle eines Blitzschlags eintretenden Potentialausgleich vermieden.

In einer Ausgestaltung weist das Windenergieanlagenrotorblatt einen Blitzschutzleiter auf, der mit dem Blitzschutzrezeptor verbunden ist und zu einer Blattwurzel führt. Der Blitzschutzleiter ist eine zweite elektrische Leitung und kann gegebenenfalls, wie die erste elektrische Leitung auch, eine Zusatzfunktion erfüllen, etwa als Versorgungs- oder Signalleitung. Hierzu kann der Blitzschutzleiter nötigenfalls galvanisch vom Erdpotential getrennt sein, beispielsweise unter Verwendung einer weiteren Funkenstrecke oder eines sonstigen Überspannungsableiters.

Die Erfindung wird nachfolgend anhand von in Figuren dargestellten Ausführungsbeispielen näher erläutert. Es zeigen:
- Fig. 1: ein aus dem Stand der Technik bekanntes Rotorblatt in einer vereinfachten, perspektivischen Darstellung,
- Fig. 2: eine Detaildarstellung einer Stromschiene für ein erfindungsgemäßes Windenergieanlagenrotorblatt in einer perspektivischen Darstellung,
- Fig. 3: eine weitere Detaildarstellung einer anderen Stromschiene für ein erfindungsgemäßes Windenergieanlagenrotorblatt, ebenfalls in einer perspektivischen Darstellung.

Alle Figuren sind schematische Darstellungen und verwenden für einander entsprechende Elemente die gleichen Bezugszeichen.

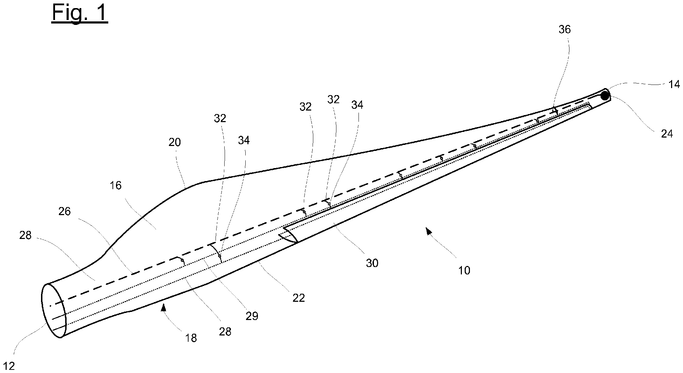

Die Figur 1 zeigt ein aus dem Stand der Technik bekanntes Windenergieanlagenrotorblatt 10 mit einer elektrischen Heizeinrichtung 30. Das Windenergieanlagenrotorblatt 10 hat eine Blattwurzel 12 und eine Blattspitze 14. In der Figur 1 ist der Blick im Wesentlichen auf die Druckseite 16 gerichtet. Auf der vom Betrachter abgewandten Seite hat das Windenergieanlagenrotorblatt 10 eine Saugseite 18.

Das Windenergieanlagenrotorblatt 10 hat eine Profilendkante 20 und eine Profilnasenkante 22. Im Bereich der Blattspitze 14 ist ein Blitzschutzrezeptor 24 angeordnet, der mit einem gestrichelt angedeuteten Blitzschutzleiter 26 elektrisch leitend verbunden ist. Über den Blitzschutzleiter 26 kann der Strom eines in den Blitzschutzrezeptor 24 einschlagenden Blitzes in Richtung zur Blattwurzel 12 hin abgeleitet werden.

Das Windenergieanlagenrotorblatt 10 weist eine in Längsrichtung vom Strom durchflossene, elektrische Heizeinrichtung 30 auf, welche an ihrem blattwurzelseitigen Ende und an ihrem blattspitzenseitigen Ende jeweils mit einem Stromversorgungskabel 28, 29 verbunden ist. Zwischen der Heizeinrichtung 30 und dem Blitzschutzleiter 26 sowie zwischen den Stromversorgungskabeln 28, 29 und dem Blitzschutzleiter 26 befinden sich Potentialausgleichsverbindungen 32, die jeweils eine zwischengeschaltete Funkenstrecke 34 aufweisen. Im Bereich der Rotorblattspitze ist eine auf der Rotorblattoberfläche liegende erfindungsgemäße Potentialausgleichsvorrichtung angeordnet, welche als Stromschiene 36 mit zwei Elektroden ausgebildet ist, zwischen denen sich eine Funkenstrecke befindet. Im normalen Betrieb sind die Heizeinrichtung 30 und der Blitzschutzleiter 26 galvanisch voneinander getrennt, um das Abfließen des Heizstroms über den Blitzschutzleiter 26 zu verhindern. Im Fall eines Blitzschlags werden die Funkenstrecken 34 vom Blitzstrom gezündet und es erfolgt ein Potentialausgleich zwischen den parallelen Leitern.

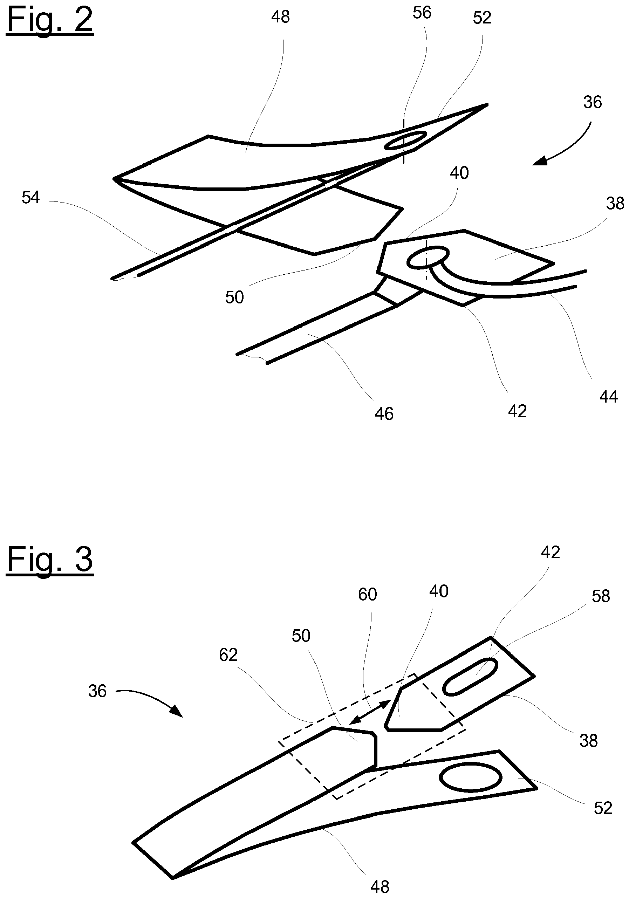

In der Figur 2 ist eine Stromschiene 36 in einer Position dargestellt, in der sie an einem erfindungsgemäßen Windenergieanlagenrotorblatt 10 befestigt ist. Das Windenergieanlagenrotorblatt 10 selbst ist in der Figur 2 weggelassen.

Die Stromschiene 36 weist einen ersten Abschnitt 38 auf, dessen erstes Ende 40 die erste Elektrode bildet. Ein zweites Ende 42 des ersten Abschnitts 38 ist mit einem in der Figur 2 nicht dargestellten Blitzschutzrezeptor 24 verbunden, und zwar über das Kabel 44. Ebenfalls mit dem ersten Abschnitt 38 der Stromschiene 36 verbunden ist ein Blitzschutzleiter 46, der zur Blattwurzel 12 führt.

Die Stromschiene 36 hat außerdem einen zweiten Abschnitt 48, der ein erstes Ende 50 aufweist, das die zweite Elektrode bildet, und ein zweites Ende 52, das mit einem ersten elektrischen Leiter 54 verbunden ist, und zwar über einen durch die nicht dargestellte Rotorblattschale hindurchgeführten Bolzen 56, angedeutet durch eine Strich-Punkt-Linie.

Der erste elektrische Leiter 54 erfüllt im normalen Betrieb des Windenergieanlagenrotorblatts eine Funktion als Versorgungsleitung für eine in der Figur 2 nicht dargestellte elektrische Heizeinrichtung 30. Im Falle eines Blitzschlags wirkt der erste elektrische Leiter 54 zusätzlich als Blitzschutzleiter und kann einen Teil des Blitzstroms zur Blattwurzel 12 hin ableiten.
Das erste Ende 40 des ersten Abschnitts 38 der Stromschiene 36 läuft in Richtung zu dem ersten Ende 50 des zweiten Abschnitts 48 der Stromschiene 36 spitz zu. Das erste Ende 50 des zweiten Abschnitts 48 der Stromschiene 36 läuft in Richtung zu dem ersten Ende 40 des ersten Abschnitts 38 der Stromschiene 36 ebenfalls spitz zu, sodass ein Bereich eines geringsten Abstands zwischen den beiden von den beiden ersten Enden 40, 50 gebildeten Elektroden räumlich genau definiert ist.

Figur 3 zeigt ein weiteres Ausführungsbeispiel einer zweigeteilten Stromschiene 36 für ein erfindungsgemäßes Windenergieanlagenrotorblatt 10. Gezeigt sind ausschließlich der erste Abschnitt 38 und der zweite Abschnitt 48 der Stromschiene 36. Man erkennt deutlich ein in dem ersten Abschnitt 38 ausgebildetes Langloch 58, das in Längsrichtung des ersten Abschnitts 38 der Stromschiene 36 verläuft und eine Befestigung des ersten Abschnitts 38 an dem Windenergieanlagenrotorblatt 10 in unterschiedlicher Stellung ermöglicht, sodass die Länge der Funkenstrecke zwischen den beiden Abschnitten 38, 48 der Stromschiene 36 gezielt eingestellt werden kann, wie durch den Pfeil 60 veranschaulicht.

Gestrichelt angedeutet ist ein Oberflächenbereich 62 des nicht dargestellten Windenergieanlagenrotorblatts 10, in dem eine hitzebeständige Beschichtung auf das Windenergieanlagenrotorblatt aufgebracht ist. In dem Oberflächenbereich 62 befinden sich die beiden Elektroden.

### Liste der verwendeten Bezugszeichen:

- 10: Windenergieanlagenrotorblatt
- 12: Blattwurzel
- 14: Blattspitze
- 16: Druckseite
- 18: Saugseite
- 20: Profilendkante
- 22: Profilnasenkante
- 24: Blitzschutzrezeptor
- 26: Blitzschutzleiter
- 28: Stromversorgungskabel
- 29: Stromversorgungskabel
- 30: Heizeinrichtung
- 32: Potentialausgleichsverbindung
- 34: Funkenstrecke
- 36: Stromschiene
- 38: erster Abschnitt der Stromschiene 36
- 40: erstes Ende des ersten Abschnitts 38
- 42: zweites Ende des ersten Abschnitts 38
- 44: Kabel
- 46: Blitzschutzleiter
- 48: zweiter Abschnitt der Stromschiene 36
- 50: erstes Ende des zweiten Abschnitts 48
- 52: zweites Ende des zweiten Abschnitts 48
- 54: erste elektrische Leitung
- 56: Bolzen
- 58: Langloch
- 60: Pfeil
- 62: Oberflächenbereich mit Beschichtung

## Patentansprüche

1. Windenergieanlagenrotorblatt (10) mit einem Blitzschutzrezeptor (24), einer ersten elektrischen Leitung (54) und einer Potentialausgleichseinrichtung, die eine erste Elektrode, die mit dem Blitzschutzrezeptor (24) verbunden ist, und eine zweite Elektrode, die mit der ersten elektrischen Leitung (54) verbunden ist, aufweist, wobei zwischen den beiden Elektroden eine Funkenstrecke ausgebildet ist, wobei die beiden Elektroden an einer Außenseite des Windenergieanlagenrotorblatts (10) angeordnet und der umgebenden Luftströmung ausgesetzt sind, **gekennzeichnet durch** eine Stromschiene (36), die einen Strompfad von einer Druckseite (16) des Windenergieanlagenrotorblatts (10) zu einer Saugseite (18) des Windenergieanlagenrotorblatts (10) bildet, in den die beiden Elektroden integriert sind und der von der Funkenstrecke unterbrochen ist.

2. Windenergieanlagenrotorblatt (10) nach Anspruch 1, **dadurch gekennzeichnet, dass** die Stromschiene (36) im Wesentlichen in Strömungsrichtung einer das Windenergieanlagenrotorblatt (10) im Betrieb umströmenden Luftströmung angeordnet ist.

3. Windenergieanlagenrotorblatt (10) nach Anspruch 1 oder 2, **dadurch gekennzeichnet, dass** die Stromschiene (36) um eine Profilendkante (20) des Windenergieanlagenrotorblatts (10) herumgeführt ist.

4. Windenergieanlagenrotorblatt (10) nach einem der Ansprüche 1 bis 3, **dadurch gekennzeichnet, dass** die Stromschiene (36) einen ersten Abschnitt (38) mit einem ersten Ende (40), das die erste Elektrode bildet, und mit einem zweiten Ende (42), das mit dem Blitzschutzrezeptor (24) verbunden ist, und einen zweiten Abschnitt (48) mit einem ersten Ende (50), das die zweite Elektrode bildet, und mit einem zweiten Ende (52), das mit der ersten elektrischen Leitung (54) verbunden ist, aufweist.

5. Windenergieanlagenrotorblatt (10) nach Anspruch 4, **dadurch gekennzeichnet**, der erste Abschnitt (38) oder der zweite Abschnitt (48) ein Langloch (58) aufweist, mit dessen Hilfe er an dem Windenergieanlagenrotorblatt (10) befestigt ist und das eine Einstellung des Abstands zwischen den beiden Elektroden ermöglicht.

6. Windenergieanlagenrotorblatt (10) nach Anspruch 4 oder 5, **dadurch gekennzeichnet, dass** der erste Abschnitt (38) oder der zweite Abschnitt (48) um die Profilendkante (20) des Windenergieanlagenrotorblatts (10) herumgeführt ist.

7. Windenergieanlagenrotorblatt (10) nach einem der Ansprüche 4 bis 6, **dadurch gekennzeichnet, dass** das erste Ende (40) des ersten Abschnitts (38) in Richtung zu dem ersten Ende (50) des zweiten Abschnitts (38) spitz zuläuft und/oder umgekehrt.

8. Windenergieanlagenrotorblatt (10) nach einem der Ansprüche 1 bis 7, **dadurch gekennzeichnet, dass** ein Oberflächenbereich (62) an der Außenseite des Windenergieanlagenrotorblatts (10), in dem die beiden Elektroden angeordnet sind, mit einer hitzebeständigen Beschichtung versehen ist.

9. Windenergieanlagenrotorblatt (10) nach einem der Ansprüche 1 bis 8, **dadurch gekennzeichnet, dass** das Windenergieanlagenrotorblatt (10) eine elektrische Heizeinrichtung (30) aufweist und die erste elektrische Leitung (54) eine Versorgungsleitung ist, über die die elektrische Heizeinrichtung (30) mit einem Heizstrom versorgt werden kann.

10. Windenergieanlagenrotorblatt (10) nach einem der Ansprüche 1 bis 9, **dadurch gekennzeichnet, dass** das Windenergieanlagenrotorblatt (10) einen Blitzschutzleiter (46) aufweist, der mit dem Blitzschutzrezeptor (26) verbunden ist und zu einer Blattwurzel (12) führt.

## Claims

1. A wind turbine rotor blade (10), having a lightning receptor (24), a first electrical line (54) and a potential equalization arrangement which has a first electrode, which is connected to the lightning receptor (24), and a second electrode, which is connected to the first electrical line (54), a spark gap being formed between the two electrodes, wherein the two electrodes are arranged on an outer side of the wind turbine rotor blade (10) and are exposed to the surrounding air flow, **characterized by** a busbar (36) which forms a current path from a pressure side (16) of the wind turbine rotor blade (10) to a suction side (18) of the wind turbine rotor blade (10), the two electrodes being integrated into said current path and said current path being interrupted by the spark gap.

2. The wind turbine rotor blade (10) as claimed in claim 1, wherein the busbar (36) is arranged substantially in the direction of an air flow which flows around the wind turbine rotor blade (10) during operation.

3. The wind turbine rotor blade (10) as claimed in one of claims 1 or 2, wherein the busbar (36) is routed around a profile trailing edge (20) of the wind turbine rotor blade (10).

4. The wind turbine rotor blade (10) as claimed in one of claims 1 to 3, wherein the busbar (36) has a first section (38) with a first end (40) which forms the first electrode and with a second end (42) which is connected to the lightning receptor (24), and has a second section (48) with a first end (50) which forms the second electrode and with a second end (52) which is connected to the first electrical line (54).

5. The wind turbine rotor blade (10) as claimed in claim 4, wherein the first section (38) or the second section (48) has an elongate hole (58) with the aid of which said section is fastened to the wind turbine rotor blade (10) and which allows the distance between the two electrodes to be adjusted.

6. The wind turbine rotor blade (10) as claimed in claim 4 or 5, wherein the first section (38) or the second section (48) is routed around the profile trailing edge (20) of the wind turbine rotor blade (10).

7. The wind turbine rotor blade (10) as claimed in one of claims 4 to 6, wherein the first end (40) of the first section (38) tapers to a point in the direction of the first end (50) of the second section (38) and/or vice versa.

8. The wind turbine rotor blade (10) as claimed in one of claims 1 to 7, wherein a surface region (62) on the outer side of the wind turbine rotor blade (10) in which the two electrodes are arranged is provided with a heat-resistant coating.

9. The wind turbine rotor blade (10) as claimed in one of claims 1 to 8, wherein the wind turbine rotor blade (10) has an electrical heating device (30), and the first electrical line (54) is a supply line via which the electrical heating device (30) can be supplied with a heating current.

10. The wind turbine rotor blade (10) as claimed in one of claims 1 to 9, wherein the wind turbine rotor blade (10) has a lightning conductor (46) which is connected to the lightning receptor (26) and leads to a blade root (12).

## Revendications

1. Pale de rotor d'éolienne (10) avec un récepteur de parafoudre (24), une première ligne électrique (54) et un dispositif d'équipotentialité présentant une première électrode reliée au récepteur de parafoudre (24) et une deuxième électrode reliée à la première ligne électrique (54), un éclateur étant formé entre les deux électrodes, les deux électrodes étant disposées sur un côté extérieur de la pale de rotor d'éolienne (10) et exposées aux flux d'air environnant, **caractérisée par** un rail conducteur (36) formant un trajet de courant à partir d'un côté pression (16) de la pale de rotor d'éolienne (10) vers un côté aspiration (18) de la pale de rotor d'éolienne (10), dans lequel les deux électrodes sont intégrées et lequel est interrompu par l'éclateur.

2. Pale de rotor d'éolienne (10) selon la revendication 1, **caractérisée en ce que** le rail conducteur (36) est disposé essentiellement dans la direction d'écoulement d'un flux d'air circulant autour de la pale de rotor d'éolienne (10) pendant le fonctionnement.

3. Pale de rotor d'éolienne (10) selon la revendication 1 ou 2, **caractérisée en ce que** le rail conducteur (36) contourne une arête d'extrémité de profil (20) de la pale de rotor d'éolienne (10).

4. Pale de rotor d'éolienne (10) selon l'une des revendications 1 à 3, **caractérisée en ce que** le rail conducteur (36) présente une première section (38) avec une première extrémité (40) formant la première électrode, et avec une deuxième extrémité (42) reliée au récepteur de parafoudre (24), et une deuxième section (48) avec une première extrémité (50) formant la deuxième électrode, et avec une deuxième extrémité (52) reliée à la première ligne électrique (54).

5. Pale de rotor d'éolienne (10) selon la revendication 4, **caractérisée en ce que** la première section (38) ou la deuxième section (48) présente un trou oblong (58) à l'aide duquel celle-ci est fixée à la pale de rotor d'éolienne (10) et lequel permet de régler l'écart entre les deux électrodes.

6. Pale de rotor d'éolienne (10) selon la revendication 4 ou 5, **caractérisée en ce que** la première section (38) ou la deuxième section (48) contourne l'arête d'extrémité de profil (20) de la pale de rotor d'éolienne (10).

7. Pale de rotor d'éolienne (10) selon l'une des revendications 4 à 6, **caractérisée en ce que** la première extrémité (40) de la première section (38) est effilée dans la direction vers la première extrémité (50) de la deuxième section (38) et/ou inversement.

8. Pale de rotor d'éolienne (10) selon l'une des revendications 1 à 7, **caractérisée en ce qu'**une zone de surface supérieure (62) sur le côté extérieur de la pale de rotor d'éolienne (10), dans laquelle sont disposées les deux électrodes, est pourvue d'un revêtement réfractaire.

9. Pale de rotor d'éolienne (10) selon l'une des revendications 1 à 8, **caractérisée en ce que** la pale de rotor d'éolienne (10) présente un dispositif de chauffage électrique (30) et la première ligne électrique (54) est une ligne d'alimentation permettant d'alimenter le dispositif de chauffage électrique (30) en courant de chauffage.

10. Pale de rotor d'éolienne (10) selon l'une des revendications 1 à 9, **caractérisée en ce que** la pale de rotor d'éolienne (10) présente un conducteur de parafoudre (46) relié au récepteur de parafoudre (24) et menant à une base de pale (12).
